Europäisches Patentamt

European Patent Office

Office européen des brevets

(19)

(11) **EP 0 754 934 B1**

(12) **EUROPÄISCHE PATENTSCHRIFT**

(45) Veröffentlichungstag und Bekanntmachung des Hinweises auf die Patenterteilung:
**06.09.2000 Patentblatt 2000/36**

(51) Int Cl.⁷: **G01F 1/84**

(21) Anmeldenummer: **95810474.7**

(22) Anmeldetag: **21.07.1995**

(54) **Coriolis-Massedurchflussmesser mit mindestens einem Messrohr**

Coriolis mass flow sensor with at least one measuring tube

Débitmètre massique selon le principe de Coriolis comprenant au moins un tube de mesure

(84) Benannte Vertragsstaaten:
**CH DE DK ES FR GB IT LI NL**

(43) Veröffentlichungstag der Anmeldung:
**22.01.1997 Patentblatt 1997/04**

(73) Patentinhaber: **Endress + Hauser Flowtec AG**
**CH-4153 Reinach BL 1 (CH)**

(72) Erfinder:
• **Drahm, Wolfgang, Dr.**
**CH-4222 Zwingen (BL) (CH)**

• **Rieder, Alfred, Dipl.-Ing.**
**D-84030 Ergolding (DE)**

(74) Vertreter: **Morstadt, Volker, Dipl.-Ing.**
**Endress + Hauser**
**Zentrale Patentabteilung**
**Postfach 2222**
**79574 Weil am Rhein (DE)**

(56) Entgegenhaltungen:
**EP-A- 0 300 301       EP-A- 0 375 300**
**WO-A-88/03261        WO-A-89/01134**
**WO-A-93/03336**

**Beschreibung**

Die Erfindung betrifft Massedurchflußmesser nach dem Coriolis-Prinzip mit mindestens einem Meßrohr für ein zu messendes Fluid.

In der eigenen WO-A 95/03528 ist ein Massedurchflußaufnehmer beschrieben, der in den Verlauf einer von einem zu messenden Fluid durchströmten Rohrleitung eines gegebenen Durchmessers axial mit ihr fluchtend über Flansche einsetzbar ist,

- mit einem geraden, vom Fluid durchflossenen, zwischen den Flanschen verlaufenden Meßrohr,
- mit einem zum Meßrohr parallelen, geraden, nichtdurchflossenen Blindrohr,
- mit einer einlaßseitigen und einer auslaßseitigen Knotenplatte,

    -- deren eine den einlaßseitigen Endteil des Meßrohrs am entsprechenden Endteil des Blindrohrs und
    -- deren andere den auslaßseitigen Endteil des Meßrohrs am entsprechenden Endteil des Blindrohrs jeweils nebeneinander fixiert,

- mit einem Trägerrohr, dessen jeweiliges Ende am jeweiligen Flansch fixiert ist,
- mit Mitteln, die nur am Blindrohr zur Erregung von Resonanz-Schwingungen des Meßrohrs angreifen, und
- mit einem am Trägerrohr angebrachten Beschleunigungssensor zur Abgabe eines Signals,

    -- durch das Schwingungen des Trägerrohrs minimiert werden.

In der eigenen US-A 49 49 583 ist ferner ein Massedurchflußaufnehmer mit einem einzigen geraden Meßrohr beschrieben, das zu peristaltischen Schwingungen seiner Querschnittsfläche angeregt wird.

In der Praxis hat sich gezeigt, daß Massedurchflußmesser mit dem eingangs zuerst erwähnten Massedurchflußaufnehmer hinsichtlich ihrer Unempfindlichkeit gegenüber Vibrationen noch nicht optimal sind. Diese Vibrationen stammen z.B.aus der Rohrleitung, in die Massedurchflußaufnehmer eingesetzt sind, und gehen z.B. auf vibrierende Pumpen zurück, die den Massefluß in der Rohrleitung bewirken.

Zur weiteren Verbesserung und Optimierung dieser Unempfindlichkeit gegenüber aus der Rohrleitung stammenden Vibrationen besteht die Erfindung daher in einem Massedurchflußmesser nach dem Coriolis-Prinzip,

- der in den Verlauf einer von einem zu messenden Fluid durchströmten Rohrleitung eines gegebenen Durchmessers axial mit ihr fluchtend, z.B. über Flansche, einsetzbar ist,
- mit mindestens einem vom Fluid durchflossenen, zwischen den Flanschen verlaufenden und daran fixierten Meßrohr,
- mit einem Trägerrohr, dessen jeweiliges Ende am jeweiligen Flansch fixiert ist,
- mit Mitteln, die das Meßrohr bzw. die Meßrohre zu Resonanz-Schwingungen anregen,
- mit einem ersten und mit einem zweiten Geschwindigkeitssensor für die Schwingungen des Meßrohrs bzw. der Meßrohre, welche Geschwindigkeitssensoren entlang des Meßrohrs bzw. der Meßrohre versetzt angeordnet sind,
- mit einem ersten und mit einem zweiten Beschleunigungssensor, die am Trägerrohr versetzt entlang einer Schnittlinie mit derjenigen Ebene fixiert sind, in der während des Betriebs des Massedurchflußmessers Corioliskräfte auftreten, und
- mit Mitteln, die aus Signalen der Geschwindigkeitssensoren und aus Signalen der Beschleunigungssensoren ein von Störungen weitestgehend befreites Massedurchfluß-Signal bilden.

Nach einer bevorzugten Ausgestaltung der Erfindung ist ein einziges gerades Meßrohr vorgesehen. Nach einer anderen bevorzugten Ausgestaltung der Erfindung ist ein einziges Meßrohr vorgesehen, das in einer Ebene verlaufend gebogen ist.

Nach einer weiteren bevorzugten Ausgestaltung der Erfindung umfassen die Mittel, die aus den Signalen der Geschwindigkeitssensoren und aus den Signalen der Beschleunigungssensoren ein Signal für den Massedurchfluß bilden, folgende Teilschaltungen:

- einen ersten Subtrahierer mit einem Subtrahend-Eingang, an den der erste Beschleunigungssensor, und mit einem Minuend-Eingang, an den der zweite Beschleunigungssensor angeschlossen ist,
- einen zweiten Subtrahierer mit einem Subtrahend-Eingang, an den der erste Geschwindigkeitssensor, und mit einem Minuend-Eingang, an den der zweite Geschwindigkeitssensor angeschlossen ist,
- einen ersten Summierer mit einem ersten Eingang, an den der erste Geschwindigkeitssensor, und mit einem zweiten Eingang, an den der zweite Geschwindigkeitssensor angeschlossen ist,

- einen ersten Multiplizierer mit einem ersten Eingang, an dem der Ausgang des ersten Subtrahierers, und mit einem zweiten Eingang, an dem ein durch Kalibrieren bei über die Rohrleitung einwirkenden Schwingungen ermittelter erster Kalibrierfaktor liegt,
- einen zweiten Multiplizierer mit einem ersten Eingang, an dem der Ausgang des ersten Summierers, und mit einem zweiten Eingang, an dem ein durch Kalibrieren bei über die Rohrleitung nicht einwirkenden Schwingungen ermittelter zweiter Kalibrierfaktor liegt,
- einen Integrator, dessen Eingang am Ausgang des zweiten Subtrahierers liegt,
- einen zweiten Summierer mit einem ersten Eingang, an dem der Ausgang des ersten Multiplizierers, und mit einem zweiten Eingang, an dem der Ausgang des Integrators liegt,
- einen ersten Inverter, der am Ausgang des zweiten Summierers angeschlossen ist,
- einen ersten Umschalter mit einem ersten Eingang, der am Ausgang des zweiten Summierers, und mit einem zweiten Eingang, der am Ausgang des ersten Inverters liegt,
- einen zweiten Inverter, der am Ausgang des zweiten Multiplizierers angeschlossen ist,
- einen zweiten Umschalter mit einem ersten Eingang, der am Ausgang des zweiten Multiplizierers, und mit einem zweiten Eingang, der am Ausgang des zweiten Inverters liegt,
- einen Schwellwertschalter mit einem Signal-Eingang, der am Ausgang des zweiten Multiplizieres, mit einem Schwellwert-Eingang, der am Schaltungsnullpunkt, und mit einem Ausgang, der an einem jeweiligen Steuereingang des ersten bzw. des zweiten Umschalters liegt,
- einen dem Ausgang des ersten Umschalters nachgeschalteten ersten Tiefpaß,
- einen dem Ausgang des zweiten Umschalters nachgeschalteten zweiten Tiefpaß,

  -- welche Tiefpässe eine obere Grenzfrequenz haben, die um etwa eine Größenordnung kleiner als die höchste in deren Eingangssignalen auftretende Frequenz ist, und

- einen Dividierer mit einem Dividend-Eingang, an dem der Ausgang des ersten Tiefpasses, und mit einem Divisor-Eingang, an dem der Ausgang des zweiten Tiefpasses liegt, sowie mit einem Ausgang, der das Massedurchfluß-Signal abgibt.

Bei der eben erwähnten Ausgestaltung können in Abwandlung der Erfindung der erste Subtrahierer und die Beschleunigungssensoren durch einen einzigen, Rotationsschwingungen aufnehmenden Beschleunigungssensor ersetzt sein.

Die Erfindung wird nun anhand der Figuren der Zeichnung näher erläutert, in der von einem Massedurchflußmesser als bevorzugte Ausführungsbeispiele ein mechanischer Teil und eine Teilschaltung zur Erzeugung eines Massedurchfluß-Signals dargestellt sind.

Fig. 1 zeigt        eine vertikale, teilweise geschnittene Längsansicht des mechanischen Teils eines Massedurchflußmessers mit einem einzigen geraden Meßrohr,

Fig. 2 zeigt        eine Teilschaltung zur Erzeugung eines Massedurchfluß-Signals, und

Fig. 3 zeigt        teilweise eine Abwandlung der Teilschaltung nach Fig. 2.

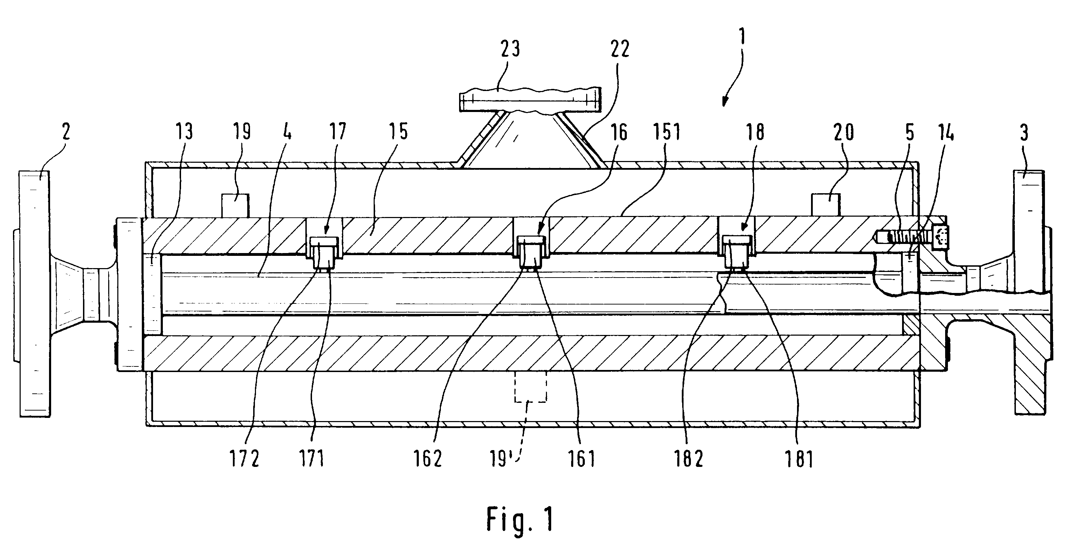

Der in Fig. 1 in vertikaler, teilweise geschnittener Längsansicht gezeigte mechanische Teil eines Massedurchflußmessers, also dessen Massedurchflußaufnehmer 1, ist in den Verlauf einer von einem zu messenden Fluid durchströmten, aus Gründen der Übersichtlichkeit jedoch nicht dargestellten Rohrleitung eines gegebenen Durchmessers über Flansche 2, 3 einsetzbar.

Der Massedurchflußaufnehmer 1 des Ausführungsbeispiels hat ein einziges gerades Meßrohr 4, das jeweils endseits am jeweiligen Flansch 2, 3, z.B. über Endplatten 13, 14, fixiert ist, in die das jeweilige Ende des Meßrohrs 4 dicht, insb. vakuum-dicht, eingepaßt, z.B. eingeschweißt, eingelötet oder eingewalzt ist, vgl. zu letzterem die eigene ältere, noch nicht veröffentlichte EP-Anmeldung 95 81 0199.0.

Anstatt eines einzigen geraden Meßrohrs kann in Ausgestaltung der Erfindung auch ein einziges, in einer Ebene verlaufendes, gebogenes Meßrohr, z.B. ein kreissektor-förmiges Meßrohr, verwendet werden. Es sind aber auch mehrere, insb. zwei, Meßrohre möglich, oder es kann bei der Erfindung auch ein Massedurchflußaufnehmer mit einem Meßrohr und einem Blindrohr entsprechend der eingangs erwähnten WO-A 95/03528 verwendet werden.

Die Flansche 2, 3 und die Endplatten 13, 14 sind an oder in einem Trägerrohr 15 befestigt. In Fig. 1 sind die Flansche 2, 3 durch Schrauben, von denen eine Schraube 5 rechts oben im Schnitt vollständig zu sehen ist, am Trägerrohr 15 fixiert. Die Endplatten 13, 14 können mit der Innenwand des Trägerrohrs 15 dicht, insb. vakuum-dicht, verschweißt oder verlötet sein. Es ist jedoch auch möglich, Trägerrohr 15 und Endplatten 13, 14 einstückig auszubilden.

Als Mittel, die das Meßrohr 4 zu Resonanz-Schwingungen, bevorzugt zu Resonanz-Biegeschwingungen, anregen, dient einerseits eine in der Mitte zwischen den Flanschen 2, 3 und den Endplatten 13, 14 sowie im Zwischenraum zwischen dem Trägerrohr 15 und dem Meßrohr 4 angeordnete, z.B. elektrodynamische, Treiberanordnung 16, die einen am Meßrohr 4 befestigten Dauermagneten 161 und eine am Trägerrohr 15 befestigte Spule 162 umfaßt, in die der Dauermagnet 161 eintaucht und in der dieser hin- und herbewegbar ist. Zu den Mitteln, die das Meßrohr zu Resonanz-Schwingungen anregen, gehört andererseits auch eine nicht dargestellte Treiberschaltung vorbeschriebener Art, vgl. z.B. die eigene US-A 48 01 897.

Im Zwischenraum zwischen dem Trägerrohr 15 und dem Meßrohr 4 sind ferner ein erster und ein zweiter Geschwindigkeitssensor 17, 18 für die Schwingungen des Meßrohrs 4 entlang von ihm versetzt, bevorzugt im gleichen Abstand von der Treiberanordnung 16, also von der Mitte des Meßrohrs 4, angeordnet.

Bei unterschiedlichem Abstand der Geschwindigkeitssensoren 17, 18 von der Mitte des Meßrohrs 4 oder bei voneinander verschiedener Empfindlichkeit derselben muß die dadurch bedingte Unsymmetrie über den Verstärkungsfaktor eines nachgeschalteten Verstärkers ausgeglichen werden.

Die Geschwindigkeitssensoren 17, 18 können z.B. optische Geschwindigkeitssensoren von der in der oben erwähnten US-A 48 01 897 beschriebenen Art sein. Bevorzugt sind die Geschwindigkeitssensoren 17, 18 jedoch elektrodynamische Geschwindigkeitssensoren, die jeweils einen am Meßrohr 4 befestigten Dauermagneten 171 bzw. 181 und jeweils eine am Trägerrohr 15 befestigte Spule 172 bzw. 182 umfassen, in die der Dauermagnet 171 bzw. 181 eintaucht und in der dieser hin- und herbewegbar ist. Am jeweiligen Geschwindigkeitssensor 17 bzw. 18 entsteht ein jeweiliges Signal $x_{17}$, $x_{18}$.

Am Trägerrohr 15 sind ein erster und ein zweiter Beschleunigungssensor 19, 20 versetzt entlang einer Schnittlinie mit derjenigen Ebene fixiert, in der während des Betriebs des Massedurchflußmessers Corioliskräfte auftreten. Am jeweiligen Beschleunigungssensor 19 bzw. 20 entsteht ein jeweiliges Signal $x_{19}$, $x_{20}$.

Die erwähnte Ebene ist in Fig. 1 die Zeichenebene, da die Treiberanordnung 16 das Meßrohr 4 zu Biegeschwingungen in der Zeichenebene anregt und daher auch in dieser Ebene Corioliskräfte auftreten. Somit ist die erwähnte Schnittlinie die in Fig. 1 zu sehende Begrenzungslinie 151 des Trägerrohrs 15. Bevorzugt haben die beiden Beschleunigungssensoren 19, 20 den gleichen Abstand von der Mitte des Trägerrohrs 15, wobei dieser Abstand mit dem oben erwähnten Abstand der Geschwindigkeitssensoren 17, 18 nicht identisch zu sein braucht.

Zur Erzielung eines möglichst großen Signal/Rausch-Verhältnisses ist der Abstand im übrigen bevorzugt so groß wie möglich zu wählen. Bei voneinander verschiedenen Abständen gilt das oben bezüglich der Geschwindigkeitssensoren Gesagte entsprechend.

Es kann zweckmäßig sein, die erwähnten Signale $x_{17}$ ... $x_{20}$ möglichst nahe bei den Sensoren dadurch von allfälligen Störsignalen zu befreien, daß sie schmalbandig gefiltert werden, wobei die Mittenfrequenz dieser Filterung die Schwingfrequenz des Meßrohrs 4 ist. Die Mittenfrequenz der hierzu vorgesehenen Bandfilter muß daher jeweils einstellbar sein.

In Fig. 1 ist schließlich noch ein am Trägerrohr 15 fixiertes Gehäuse 21 gezeigt, das u.a. dem Schutz von Leitungen dient, die an die Treiberanordnung 16, die Geschwindigkeitssensoren 17, 18 und an die Beschleunigungssensoren 19, 20 angeschlossen, jedoch aus Gründen der Übersichtlichkeit nicht dargestellt sind.

Das Gehäuse 21 ist mit einem hals-artigen Übergangsstück 22 versehen, an dem ein nur teilweise gezeichnetes Elektronikgehäuse 23 zur Aufnahme der gesamten Antriebs- und Auswerte-Elektronik des Massedurchflußmessers fixiert ist.

Für den Fall, daß das Übergangsstück 22 und das Elektronikgehäuse 23 das Schwingungsverhalten des Trägerrohrs 15 ungünstig beeinflussen sollte, können diese auch getrennt vom Massedurchflußaufnehmer 1 angeordnet werden. Dann besteht lediglich eine Leitungsverbindung zwischen der Elektronik und dem Massedurchflußaufnehmer 1.

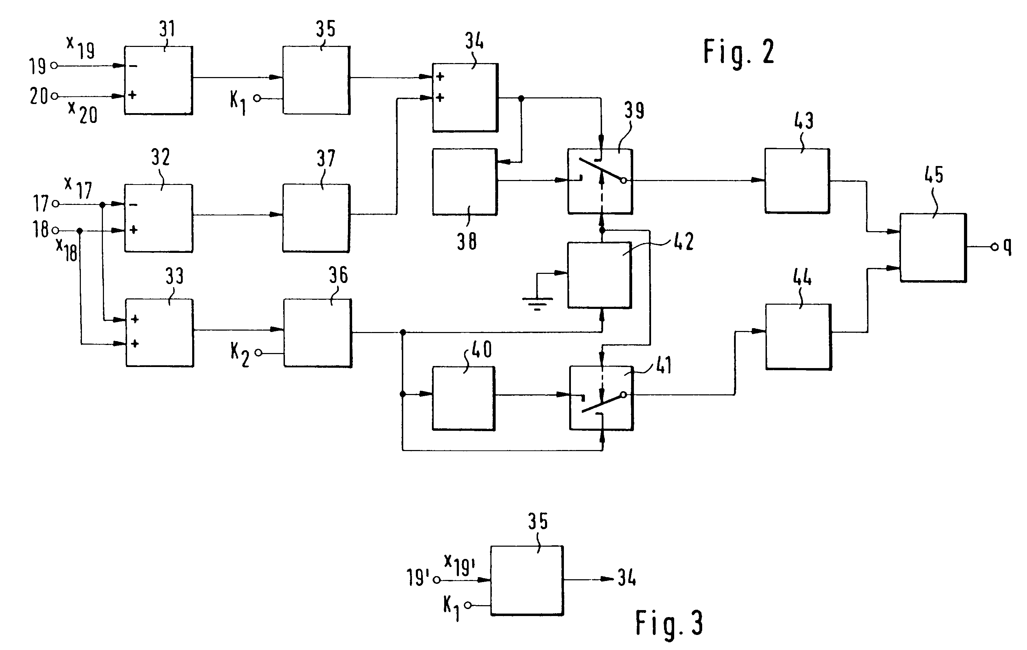

In Fig. 2 sind Mittel gezeigt, die aus den Signalen $x_{17}$, $x_{18}$ der Geschwindigkeitssensoren 17, 18 und aus den Signalen $x_{19}$, $x_{20}$ der Beschleunigungssensoren 19, 20 ein von Störungen weitestgehend befreites Massedurchfluß-Signal bilden. Diese Mittel umfassen die in Fig. 2 enthaltenen Teilschaltungen.

Der erste Beschleunigungssensor 19 ist an einem Subtrahend-Eingang "-" eines ersten Subtrahierers 31 und der zweite Beschleunigungssensor 20, an einem Minuend-Eingang "+" dieses Subtrahierers 31 angeschlossen. Ferner ist der erste Geschwindigkeitssensor 17 an einem Subtrahend-Eingang "-" eines zweiten Subtrahierers 32 und der zweite Geschwindigkeitssensor 18 an einem Minuend-Eingang "+" dieses Subtrahierers 32 angeschlossen. Auch ist der erste Geschwindigkeitssensor 17 mit einem ersten Eingang "+" eines ersten Summierers 33 und der zweite Geschwindigkeitssensor 18 mit einem zweiten Eingang "+" dieses Summierers verbunden.

Der Ausgang des ersten Subtrahierers 31 liegt an einem ersten Eingang eines ersten Multiplizierers 35, dessen zweitem Eingang ein durch Kalibrieren bei über die Rohrleitung einwirkenden Schwingungen ermittelter erster Kalibrierfaktor $K_1$ zugeführt ist. Ferner liegt der Ausgang des ersten Summierers 33 an einem ersten Eingang eines zweiten Multiplizierers 36, an dessen zweitem Eingang ein durch Kalibrieren bei über die Rohrleitung nicht einwirkenden Schwingungen ermittelter zweiter Kalibrierfaktor $K_2$ liegt.

Die beiden Kalibrierfaktoren $K_1$, $K_2$ werden wie üblich nach Fertigstellung des Massedurchflußmessers durch Kalibrieren, also durch Vergleich eines bekannten Massedurchflusses mit vom Massedurchflußmesser für diesen bekannten Massedurchfluß gemessenen Durchflußmeßwerten ermittelt und anschließend in einer im Massedurchflußmesser vorhandenen Speicher-Anordnung, z.B. einem EEPROM (= electrically erasable and programmable read-only memory) oder in einem ähnlichen Halbleiterspeicher, abgelegt.

Ferner liegt ein Eingang eines Integrators 37 am Ausgang des zweiten Subtrahierers 32. Der Ausgang des ersten Multiplizierers 35 ist mit einem ersten Eingang "+" eines zweiten Summierers 34 verbunden, an dessen zweitem Eingang "+" der Ausgang des Integrators 37 liegt.

Der Ausgang des zweiten Summierers 34 liegt am Eingang eines ersten Inverters 38, der bei am Ausgang des Summierers 34 auftretenden Analogsignalen z.B. durch eine mit -1 multiplizierende Stufe oder bei am Ausgang des Summierers 34 auftretenden Digitalsignalen z.B. durch einen Digital-Inverter realisiert sein kann.

Der jeweilige Ausgang von zweitem Summierer 34 und erstem Inverter 38 ist mit einem ersten bzw. mit einem zweiten Eingang eines ersten Umschalters 39 verbunden.

Der Ausgang des zweiten Multiplizierers 36 liegt am Eingang eines zweiten Inverters 40, der bei am Ausgang des zweiten Multiplizierers 36 auftretenden Analogsignalen z.B. wiederum durch eine mit -1 multiplizierende Stufe oder bei am Ausgang des zweiten Multiplizierers 36 auftretenden Digitalsignalen z.B. wiederum durch einen Digital-Inverter realisiert sein kann.

An einem Signal-Eingang eines Schwellwertschalters 42 liegt der Ausgang des zweiten Multiplizieres 36, und an einem Schwellwert-Eingang der Schaltungsnullpunkt. Das Ausgangssignal des Schwellwertschalters 42 steuert den jeweiligen Umschalter 39 bzw. 41.

Der erste Inverter 38, der erste Umschalter 39 und der Schwellwertschalter 40 bzw. der zweite Inverter 40, der zweite Umschalter 39 und der Schwellwertschalter 40 haben jeweils die Funktion eines ersten bzw. eines zweiten Synchrongleichrichters.

Anstatt des zweiten Synchrongleichrichters kann auch ein Spitzenwert-Gleichrichter vorgesehen sein, dessen Eingang am Ausgang des zweiten Multiplizierers 36 anzuschließen ist und der sowohl ein Halbwellen- als auch ein Vollwellen-Gleichrichter sein kann.

Dem Ausgang des Umschalters 39 bzw. 41 ist ein erster bzw. ein zweiter Tiefpaß 43, 44 nachgeschaltet. Beide Tiefpässe haben jeweils eine obere Grenzfrequenz, die um etwa eine Größenordnung kleiner als die höchste in deren Eingangssignalen, also im Ausgangssignal des jeweiligen Umschalters 39 bzw. 41, auftretende Frequenz ist.

Schließlich liegt der Ausgang des ersten Tiefpasses 43 an einem Dividend-Eingang eines Dividierers 45, an dessen Divisor-Eingang der Ausgang des zweiten Tiefpasses 44 angeschlossen ist. Der Ausgang des Dividierers 45 gibt ein Massedurchfluß-Signal q ab.

In Fig. 3 ist teilweise eine Abwandlung der Schaltung nach Fig. 2 gezeigt. Anstatt des in Fig. 3 fehlenden ersten Subtrahierers 31 von Fig. 2 und anstatt der beiden Beschleunigungssensoren 19, 20 nach Fig. 1 ist nur noch ein einziger, Rotationsschwingungen aufnehmender Beschleunigungssensor 19' vorgesehen, der bevorzugt in der Mitte des Trägerrohrs 15 angeordnet und in Fig. 1 gestrichelt gezeichnet ist. Er ist ferner mit dem ersten Eingang des ersten Multiplizierers 35 verbunden.

Die Schaltungen der Fig. 2 und 3 setzen voraus, daß es sich bei den darin enthaltenen Teilschaltungen um Schaltungen handelt, die die von den Beschleunigungssensoren und von den Geschwindigkeitssensoren erzeugten Analogsignale analog verarbeiten. Es liegt jedoch im Rahmen der Erfindung, anstatt solcher Analog-Schaltungen entsprechende Digital-Schaltungen einzusetzen, wie oben hinsichtlich des Inverters 38 bereits erläutert worden ist.

Dann sind aber entweder die Beschleunigungssensoren und die Geschwindigkeitssensoren durch solche zu ersetzen, die Digitalsignale abgeben, oder es sind den Ausgängen der Beschleunigungssensoren und der Geschwindigkeitssensoren Analog/Digital-Wandler nachzuschalten.

Die Schaltungen der Fig. 2 und 3 und ihre Funktionsweise gehen auf die im folgenden erläuterten Erkenntnisse der Erfinder zurück. Für den Betriebszustand des Massedurchflußmessers 1 können drei verschiedene Schwingungsmodi definiert werden, denen jeweils eine (im mathematischen Sinne) komplexe Schwingungsamplitude zugeordnet werden kann.

Diese komplexen Schwingungsamplituden sind jeweils mit einem großen Buchstaben, z.B allgemein mit Y, bezeichnet. Davon durch die Schreibweise unterschieden ist die jeweils zugehörige Amplitude des reell gemessenen Signals, die mit dem entsprechenden kleinen Buchstaben, z.B. also mit y, bezeichnet ist. Für diesen allgemeinen Zusammenhang gilt somit:

$$y = \mathrm{Re}\,\{Y \cdot \exp(j\Omega t)\} = |Y| \cdot \cos[\Omega t + \arg(Y)] \qquad (1)$$

$$Y = |Y| \cdot \exp[j \cdot \arg(Y)] \qquad (2)$$

In den Gleichungen (1), (2) ist

$j = \sqrt{-1}$,

$\Omega = 2\pi f$; f ist die Schwingfrequenz des Meßrohrs 4,

t      die Zeitvariable,

Re    ein Operator, der den Realteil der komplexen Amplitude liefert,

| |    ein Operator, der den Betrag der komplexen Amplitude liefert und

arc   ein Operator, der die Phase der komplexen Amplitude liefert.

Um auf die oben erwähnten Schwingungsmodi des Massedurchflußmessers zurückzukommen, hat das Meßrohr 4 einen Antriebsmode mit der (komplexen) Auslenkungsamplitude $A_A$ und einen Coriolismode mit der (komplexen) Auslenkungsamplitude $A_C$, während das Trägerrohr 15 einen Rotationsmode mit der (komplexen) Auslenkungsamplitude $A_R$ hat.

Für die Auslenkungsamplitude $A_C$ des Coriolismodes kann die folgende Anregungsgleichung aufgestellt werden:

$$A_C = K_C[j\Omega Q K_{CA} A_A - (j\Omega)^2 K_{CR} A_R]$$

$$= Q K_C K_{CA} V_A - K_C K_{CR} B_R$$

$$= V_C/(j\Omega) \tag{3}$$

Daraus ergibt sich der (komplexe) Massedurchfluß Q wie folgt:

$$Q = [V_C/(j\Omega) + K_R B_R]/(K_A V_A)$$

$$= (A_C + K_R B_R)/(K_A V_A)$$

$$= A_C'/(K_A V_A) \tag{4}$$

In den Gleichungen (3), (4) und in den folgenden Gleichungen ist

$K_A$:     der (reelle) Übertragungsfaktor der angeregten Schwingung des Meßrohrs 4, der durch die erwähnte Kalibrierung zu ermitteln ist und somit gleich dem obigen Kalibrierfaktor $K_2$ ist,

$K_C$:     der (reelle) Übertragungsfaktor des Coriolismodes des Meßrohrs 4,

$K_R$:     der (reelle) Übertragungsfaktor der durch Störungen angeregten Drehschwingungen des Trägerrohrs 15, der durch die erwähnte Kalibrierung zu ermitteln ist und somit gleich dem obigen Kalibrierfaktor $K_1$ ist,

$K_{CA}$:    der (reelle) Kopplungsfaktor zwischen Antriebsmode und Coriolismode des Meßrohrs 4,

$K_{CR}$:    der (reelle) Kopplungsfaktor zwischen dem dem Rotationsmode des Trägerrohrs 15 und dem Coriolismode des Meßrohrs 4,

$V_A$:     die (komplexe) Amplitude der Geschwindigkeit des Meßrohrs 4 im Antriebsmode,

$V_C$:     die (komplexe) Amplitude der Geschwindigkeit des Meßrohrs 4 im Coriolismode,

$B_R$:     die (komplexe) Amplitude der Drehbeschleunigung des Trägerrohrs 15 im Rotationsmode und

$A_C'$:     die korrigierte (komplexe) Auslenkungsamplitude des Meßrohrs 4 im Coriolismode.

Die komplexen Größen $V_A$, $V_C$, $B_R$ können aus den (komplexen) Amplituden $X_{17}$, $X_{18}$ der Signale $x_{17}$, $x_{18}$ der Geschwindigkeitssensoren 17, 18 und aus den (komplexen) Amplituden $X_{19}$, $X_{20}$ der Signale $x_{19}$, $x_{20}$ der Beschleunigungssensoren 19, 20 mittels der folgenden Gleichungen abgeleitet werden:

$$V_A = X_{18} + X_{17} \tag{5}$$

$$V_C = X_{18} - X_{17} \tag{6}$$

$$B_R = X_{20} - X_{19} \qquad (7)$$

Der Realteil Re {Q} des (komplexen) Massedurchflusses Q ergibt den (reellen) Massedurchfluß q:

$$q = \text{Re}\{Q\} = |A_C| / (K_A |V_A|) \qquad (8)$$

Ein verallgemeinerter systematischer Zusammenhang ergibt sich aus der folgenden Gleichung für die Anregung der Schwingungen eines nicht ideal symmetrischen Massedurchflußaufnehmers:

$$A_C = K_C[QL_{cs}V_A - M_{rs}B_R - M_{rd}B_A - D_{rd}V_A$$

$$- S_{rd}A_A - M_{rd}B_T + QL_{cd}V_C] \qquad (9)$$

Nach Q aufgelöst:

$$Q = A_C/(K_C L_{cs} V_A) + M_{rs}B_R/(L_{cs}V_A) + M_{rd}B_A/(L_{cs}V_A)$$

$$+ D_{rd}/L_{cs} + S_{rd}A_A/(L_{cs}V_A) + M_{rd}B_T/(L_{cs}V_A)$$

$$- QL_{cd}V_C/(L_{cs}V_A) \qquad (10)$$

In den Gleichungen (9), (10) sind

$B_T$: die (komplexe) Amplitude der Beschleunigung des Trägerrohrs 15 im Translationsmode,
M: die Masse des Meßrohrs 4,
D: die Dämpfung des Schwingungssystems,
S: die Steifigkeit des Meßrohrs 4 und
L: die Dämpfung des Coriolismodes.

Ferner bedeuten die kleingeschriebenen Indices:

c als erster Index: den Coriolismode betreffend,
r als erster Index: das Meßrohr 4 betreffend,
s als zweiter Index: den symmetrischen Anteil und
d als zweiter Index: den unsymmetrischen Anteil.

Durch den Synchrondemodulator werden Signalanteile unterdrückt, die nicht in Phase mit $V_A$ sind, nämlich in Gleichung (10) den dritten, fünften und siebten Term. Daher ergibt sich für q:

$$q = \text{Re}\{Q\} = A_C/(K_C L_{cs} V_A) + M_{rs}B_R/(L_{cs}V_A) + D_{rd}/L_{cs}$$

$$+ M_{rd}B_T/(L_{cs}V_A) \qquad (11)$$

Darin ist

der erste Term: der gewünschte Meßeffekt,
der zweite Term: ein Störanteil aufgrund symmetrischer Masseanteile des Meßrohrs 4 und des Rotationsmodes,
der dritte Term: ein Störanteil aufgrund des asymmetrischen Dämpfungsanteils des Meßrohrs 4 und
der vierte Term: ein Störanteil aufgrund des asymmetrischen Masseanteils des Meßrohrs 4 und des Translationsmodes.

Aufgrund der anhand der Gleichungen (1) bis (11) erläuterten Zusammenhänge ist es klar, daß es im Rahmen der Erfindung liegt, die Geschwindigkeitssensoren 17, 18 durch Wegsensoren oder durch Beschleunigungssensoren zu ersetzen, wobei aus deren jeweiligen Signalen mittels Teilschaltungen, die bei Wegsensoren zeitlich einmal differenzieren bzw. die bei Beschleunigungssensoren zeitlich einmal integrieren, Geschwindigkeitssignale zu erzeugen sind.

Ferner liegt es im Rahmen der Erfindung, die Beschleunigungssensoren 19, 20 durch Wegsensoren oder durch Geschwindigkeitssensoren zu ersetzen, wobei aus deren jeweiligen Signalen mittels Teilschaltungen, die bei Wegsensoren zeitlich zweimal differenzieren bzw. die bei Geschwindigkeitssensoren zeitlich einmal differenzieren, Beschleunigungssignale zu erzeugen sind.

Schließlich liegt es auch im Rahmen der Erfindung, die Funktionen der einzelnen Teilschaltungen der Fig. 2 und 3 mittels eines geeignet programmierten Mikroprozessors zu realisieren.

## Patentansprüche

1.  Massedurchflußmesser nach dem Coriolis-Prinzip,

    -   der in den Verlauf einer von einem zu messenden Fluid durchströmten Rohrleitung eines gegebenen Durchmessers axial mit ihr fluchtend, z.B. über Flansche, einsetzbar ist,
    -   mit mindestens einem vom Fluid durchflossenen, zwischen den Flanschen (2, 3) verlaufenden und daran fixierten Meßrohr (4),
    -   mit einem Trägerrohr (15), dessen jeweiliges Ende am jeweiligen Flansch (2, 3) fixiert ist,
    -   mit Mitteln, die das Meßrohr (4) bzw. die Meßrohre zu Resonanz-Schwingungen anregen,
    -   mit einem ersten und mit einem zweiten Geschwindigkeitssensor (17, 18) für die Schwingungen des Meßrohrs (4) bzw. der Meßrohre, welche Geschwindigkeitssensoren entlang des Meßrohrs bzw. der Meßrohre versetzt angeordnet sind,
    -   mit einem ersten und mit einem zweiten Beschleunigungssensor (19, 20), die am Trägerrohr (15) versetzt entlang einer Schnittlinie mit derjenigen Ebene fixiert sind, in der während des Betriebs des Massedurchflußmessers Corioliskräfte auftreten, und
    -   mit Mitteln, die aus Signalen ($x_{17}$, $x_{18}$) der Geschwindigkeitssensoren (17, 18) und aus Signalen ($x_{19}$, $x_{20}$) der Beschleunigungssensoren (19, 20) ein von Störungen weitestgehend befreites Massedurchfluß-Signal (q) bilden.

2.  Massedurchflußmesser nach Anspruch 1 mit einem einzigen geraden Meßrohr.

3.  Massedurchflußmesser nach Anspruch 1 mit einem einzigen in einer Ebene verlaufenden gebogenen Meßrohr.

4.  Massedurchflußmesser nach Anspruch 1, bei dem die Mittel, die aus den Signalen ($x_{17}$, $x_{18}$) der Geschwindigkeitssensoren (17, 18) und aus den Signalen ($x_{19}$, $x_{20}$) der Beschleunigungssensoren (19, 20) ein Signal für den Massedurchfluß bilden, folgende Teilschaltungen umfassen:

    -   einen ersten Subtrahierer (31) mit einem Subtrahend-Eingang (-), an den der erste Beschleunigungssensor (19), und mit einem Minuend-Eingang (+), an den der zweite Beschleunigungssensor (20) angeschlossen ist,
    -   einen zweiten Subtrahierer (32) mit einem Subtrahend-Eingang (-), an den der erste Geschwindigkeitssensor (17), und mit einem Minuend-Eingang (+), an den der zweite Geschwindigkeitssensor (18) angeschlossen ist,
    -   einen ersten Summierer (33) mit einem ersten Eingang, an den der erste Geschwindigkeitssensor (17), und mit einem zweiten Eingang, an den der zweite Geschwindigkeitssensor (18) angeschlossen ist,
    -   einen ersten Multiplizierer (35) mit einem ersten Eingang, an dem der Ausgang des ersten Subtrahierers (31), und mit einem zweiten Eingang, an dem ein durch Kalibrieren bei über die Rohrleitung einwirkenden Schwingungen ermittelter erster Kalibrierfaktor ($K_1$) liegt,
    -   einen zweiten Multiplizierer (36) mit einem ersten Eingang, an dem der Ausgang des ersten Summierers (33), und mit einem zweiten Eingang, an dem ein durch Kalibrieren bei über die Rohrleitung nicht einwirkenden Schwingungen ermittelter zweiter Kalibrierfaktor ($K_2$) liegt,
    -   einen Integrator (37), dessen Eingang am Ausgang des zweiten Subtrahierers (32) liegt,
    -   einen zweiten Summierer (34) mit einem ersten Eingang, an dem der Ausgang des ersten Multiplizierers (35), und mit einem zweiten Eingang, an dem der Ausgang des Integrators (37) liegt,
    -   einen ersten Inverter (38), der am Ausgang des zweiten Summierers (34) angeschlossen ist,
    -   einen ersten Umschalter (39) mit einem ersten Eingang, der am Ausgang des zweiten Summierers (34), und mit einem zweiten Eingang, der am Ausgang des ersten Inverters (38) liegt,

- einen zweiten Inverter (40), der am Ausgang des zweiten Multiplizierers (36) angeschlossen ist,
- einen zweiten Umschalter (41) mit einem ersten Eingang, der am Ausgang des zweiten Multiplizierers (36), und mit einem zweiten Eingang, der am Ausgang des zweiten Inverters (40) liegt,
- einen Schwellwertschalter (42) mit einem Signal-Eingang, der am Ausgang des zweiten Multiplizieres (36), mit einem Schwellwert-Eingang, der am Schaltungsnullpunkt, und mit einem Ausgang, der an einem jeweiligen Steuereingang des ersten bzw. des zweiten Umschalters (41) liegt,
- einen dem Ausgang des ersten Umschalters (39) nachgeschalteten ersten Tiefpaß (43),
- einen dem Ausgang des zweiten Umschalters (41) nachgeschalteten zweiten Tiefpaß (44),

-- welche Tiefpässe eine obere Grenzfrequenz haben, die um etwa eine Größenordnung kleiner als die höchste in deren Eingangssignalen auftretende Frequenz ist, und

- einen Dividierer (45)) mit einem Dividend-Eingang, an dem der Ausgang des ersten Tiefpasses (43), und mit einem Divisor-Eingang, an dem der Ausgang des zweiten Tiefpasses (44) liegt, sowie mit einem Ausgang, der das Massedurchfluß-Signal (q) abgibt.

**5.** Massedurchflußmesser nach Anspruch 4, bei dem der erste Subtrahierer (31) und die Beschleunigungssensoren (19, 20) durch einen einzigen, Rotationsschwingungen aufnehmenden Beschleunigungssensor (19') ersetzt sind.

**Claims**

**1.** A Coriolis-type mass flow meter

- which can be installed, e.g., by means of flanges, in a conduit of a given diameter so as to be axially aligned with said conduit, through which flows a fluid to be measured,
- with at least one measuring tube (4) extending between and fixed to the flanges (2, 3) and traversed by the fluid,
- with a support tube (15) having its ends fixed to the respective flanges (2, 3),
- with means for exciting the measuring tube (4) or measuring tubes into resonance vibrations,
- with a first velocity sensor (17) and a second velocity sensor (18) positioned along the measuring tube (4) or measuring tubes for measuring the vibrations of the measuring tube or measuring tubes,
- with a first acceleration sensor (19) and a second acceleration sensor (20) positioned on the support tube (15) along a line of intersection with that plane in which Coriolis forces act during operation of the mass flow meter, and
- with means for processing signals ($x_{17}$, $x_{18}$) from the velocity sensors (16, 17) and signals ($x_{19}$, $x_{20}$) from the acceleration sensors (19, 20) into a mass flow rate signal which is substantially free from interference.

**2.** The Coriolis-type mass flow meter as claimed in claim 1 wherein a single straight measuring tube is provided.

**3.** The Coriolis-type mass flow meter as claimed in claim 1 wherein a single bent measuring tube is provided which extends in one plane.

**4.** The Coriolis-type mass flow meter as claimed in claim 1 wherein the means for processing the signals ($x_{17}$, $x_{18}$) from the velocity sensors (17, 18 ) and the signals ($x_{19}$, $x_{20}$) from the acceleration sensors (19, 20) into a mass flow rate signal comprise the following subcircuits:

- a first subtracter (31) having a subtrahend input (-) connected to the first acceleration sensor (19) and a minuend input (+) connected to the second acceleration sensor (20);
- a second subtracter (32) having a subtrahend input (-) connected to the first velocity sensor (17) and a minuend (+) input connected to the second velocity sensor (18);
- a first summer (33) having a first input connected to the first velocity sensor (17) and a second input connected to the second velocity sensor (18);
- a first multiplier (35) having a first input connected to the output of the first subtracter (31) and a second input to which a first calibration factor ($K_1$) determined by calibration in the presence of vibrations acting on the mass flow meter via the conduit is applied;
- a second multiplier (36) having a first input connected to the output of the first summer (33) and a second input to which a second calibration factor ($K_2$) determined by calibration in the absence of vibrations acting on the mass flow sensor via the conduit is applied;

- an integrator (37) having its input connected to the output of the second subtracter (32);
- a second summer (34) having a first input connected to the output of the first multiplier (35) and a second input connected to the output of the integrator (37);
- a first inverter (38) connected to the output of the second summer (34);
- a first double-throw switch (39) having a first input connected to the output of the second summer (34) and a second input connected to the output of the first inverter (38);
- a second inverter (40) connected to the output of the second multiplier (36);
- a second double-throw switch (41) having a first input connected to the output of the second multiplier (36) and a second input connected to the output of the second inverter (40);
- a threshold switch (42) having a signal input connected to the output of the second multiplier (36), a threshold input connected to ground, and an output connected to the control inputs of the first double-throw switch (39) and the second double-throw switch (41);
- a first low-pass filter (43) connected to the output of the first double-throw switch (39);
- a second low-pass filter (44) connected to the output of the second double-throw switch (41),

  -- said low-pass filters having an upper cutoff frequency which is approximately one order of magnitude lower than the highest frequency occurring in their input signals; and

- a divider (45) having a dividend input connected to the output of the first low-pass filter (43), a divisor input connected to the output of the second low-pass filter (44), and an output providing the mass flow rate signal (q).

5. The Coriolis-type mass flow meter as claimed in claim 4 wherein the first subtracter (31) and the acceleration sensors (19, 20 are replaced by a single acceleration sensor (19') which responds to rotation vibrations.

**Revendications**

1. Débitmètre massique selon le principe de Coriolis,

- qui peut être installé par exemple à l'aide de brides dans une tuyauterie d'un diamètre donné traversée par un fluide à mesurer, axialement aligné sur celle-ci, et comprenant

- au moins un tube gradué (4), traversé par le fluide, s'étendant entre les brides (2, 3) et étant fixé sur celles-ci,

- un tube de support (15) dont l'extrémité respective est fixée à la bride (2, 3) respective,

- des moyens qui excitent le(s) tube(s) gradué(s) (4) en oscillations de résonance,

- un premier et un deuxième capteurs de vitesse (17, 18) pour les oscillations du tube ou des tubes gradué(s) (4) et qui sont disposés de façon décalée le long du tube ou des tubes gradué(s),

- un premier et un deuxième capteurs d'accélération (19, 20) qui sont fixés de façon décalée sur le tube de support (15) le long d'une ligne d'intersection avec le plan dans lequel des forces de Coriolis se produisent lors du fonctionnement du débitmètre, et

- des moyens qui forment un signal de débit massique (q) quasi sans parasites à partir de signaux ($x_{17}$ $x_{18}$) des capteurs de vitesse (17, 18) et à partir de signaux ($x_{19}$ $x_{20}$) des capteurs d'accélération (19, 20).

2. Débitmètre massique selon la revendication 1 avec un seul tube gradué droit.

3. Débitmètre massique selon la revendication 1 avec un seul tube gradué cintré s'étendant dans un plan.

4. Débitmètre massique selon la revendication 1, où les moyens qui forment un signal pour le débit massique à partir des signaux ($x_{17}$ $x_{18}$) des capteurs de vitesse (17, 18) et à partir des signaux ($x_{19}$, $x_{20}$) des capteurs d'accélération (19, 20) comprennent les circuits partiels suivants :

- un premier soustracteur (31) avec une entrée de nombres à soustraire (-) à laquelle est raccordé le premier capteur d'accélération (19), et avec une entrée de diminuendes (+) à laquelle est raccordé le deuxième capteur d'accélération (20),

- un deuxième soustracteur (32) avec une entrée de nombres à soustraire (-) à laquelle est raccordé le premier capteur de vitesse (17), et avec une entrée de diminuendes (+) à laquelle est raccordé le deuxième capteur de vitesse (18),

- un premier additionneur (33) avec une première entrée à laquelle est raccordé le premier capteur de vitesse (17), et avec une deuxième entrée à laquelle est raccordé le deuxième capteur de vitesse (18),

- un premier multiplicateur (35) avec une première entrée à laquelle est appliquée la sortie du premier soustracteur (31), et avec une deuxième entrée à laquelle est appliqué un premier facteur de calibrage ($K_1$) déterminé par calibrage en présence d'oscillations agissant par l'intermédiaire de la tuyauterie,

- un deuxième multiplicateur (36) avec une première entrée à laquelle est appliquée la sortie du premier additionneur (33), et avec une deuxième entrée à laquelle est appliqué un deuxième facteur de calibrage ($K_2$) déterminé par calibrage en présence d'oscillations n'agissant pas par l'intermédiaire de la tuyauterie,

- un intégrateur (37) dont l'entrée est appliquée à la sortie du deuxième soustracteur (32),

- un deuxième additionneur (34) avec une première entrée à laquelle est appliquée la sortie du premier multiplicateur (35), et avec une deuxième entrée à laquelle est appliquée la sortie de l'intégrateur (37),

- un premier inverseur (38) raccordé à la sortie du deuxième additionneur (34),

- un premier commutateur (39) avec une première entrée appliquée à la sortie du deuxième additionneur (34), et avec un deuxième entrée appliquée à la sortie du premier inverseur (38),

- un deuxième inverseur (40) raccordé à la sortie du deuxième multiplicateur (36),

- un deuxième commutateur (41) avec une première entrée appliquée à la sortie du deuxième multiplicateur (36), et avec une deuxième entrée appliquée à la sortie du deuxième inverseur (40),

- un interrupteur à seuil (42) avec une entrée de signaux appliquée à la sortie du deuxième multiplicateur (36), avec une entrée de valeurs de seuil appliquée au point zéro de couplage, et avec une sortie appliquée à l'entrée de commande respective du premier ou du deuxième commutateur (41),

- un premier passe-bas (43) en aval de la sortie du premier commutateur (39),

- un deuxième passe-bas (44) en aval de la sortie du deuxième commutateur (41),

    -- lesquels passe-bas présentant une fréquence limite supérieure qui est plus petite d'environ un ordre de grandeur que la plus haute fréquence présente dans leurs signaux d'entrée, et

- un diviseur (45) avec une entrée de dividende à laquelle est appliquée la sortie du premier passe-bas (43), et avec une entrée de diviseur à laquelle est appliquée la sortie du deuxième passe-bas (44), ainsi qu'avec une sortie émettant le signal de débit massique (q).

5.  Débitmètre massique selon la revendication 4, où le premier soustracteur (31) et les capteurs d'accélération (19, 20) sont remplacés par un seul capteur d'accélération (19') recevant des oscillations de rotation.

Fig. 1

Fig. 2

Fig. 3